# EUROPEAN PATENT APPLICATION

(11) **EP 1 693 778 A1**
(43) Date of publication of application: **23.08.2006**
(21) Application number: 06075366.2
(22) Date of filing: 17.02.2006
(51) Int. Cl.: G06K 7/08, G06K 7/10

(54) **Shelf system having a label detecting system for reading out RFID labels**

(30) Priority: 18.02.2005 NL 1028330
(71) Applicant: N.V. Nederlandsche Apparatenfabriek NEDAP, 7141 DC Groenlo (NL)
(72) Inventor: Kip, Harm Jacob, 7132 CS Lichtenvoorde (NL)
(74) Representative: Winckels, Johannes Hubertus F.

(57) **Abstract**

The shelf system is provided with a rack and a label detection system for generating an electromagnetic interrogation field for reading out RFID labels which are located in or on the rack. The label detection system is provided with a first and a second antenna system for transmitting an interrogation field. The label detection system is arranged for generating the interrogation field in the form of a rotary field with the first and the second antenna system.

## Description

The invention relates to a shelf system provided with a rack and a label detection system for generating an electromagnetic interrogation field for reading out RFID labels located in or on the rack.

The invention further relates to a label detection system of the shelf system, and a shelf of the shelf system.

Such shelf systems are known per se.

An obvious solution for taking stock of the articles on a shelf is using an RFID reader with a large detection antenna behind the shelf. Therewith, the RFID labels of the products are read. However, a number of drawbacks of this solution become immediately apparent. The detection area is not clearly delimited; it is not possible to draw a sharp line between on the shelf and from the shelf. Customer-oriented action, based on taking an article from a shelf for shops, requires a quick reaction of the system, and a delimited work area. In addition, in such a set-up with a single antenna, there are positions where the labels do not couple with the antenna, and which are therefore not seen.

What is also important here is a protocol with which quickly scanning many labels is possible (also called multiscan). In WO 2004/012134 (Philips), such a protocol is described. Known are also the data of a number of ICs of Philips with such a protocol: I.CODE EPC smart label IC, and closely related thereto is I.CODE UID Smart label IC. In this protocol, the label selects a response in a time lock. The number of time locks from which a selection can be made is transmitted by the reader to the label with the read-out command. The chance that different labels select a same time lock depends on the number of labels in the field and the number of time locks that is made available. However, using many time locks takes a long time; this makes the system slow. With few time locks, there is a high risk of collisions, and the multiscan needs to be repeated, which also takes up extra time. A large receiving antenna, which may optionally be combined with the transmitting antenna for generating the magnetic field activating the labels (also called interrogation field), couples all labels within reach. This antenna coil contains the response of all labels which are active. In general, many collisions will occur, and multiple scans are needed to detect all labels. The use of small separate receiving antenna coils which do not couple with the transmitting coil allows the translation of a spatial sep aration of transponders into signal intensity differences on these receiving coils. This allows increasing the reading speed of transponders. This principle is known from WO 94/19781 (NEDAP), however only in combination with a single transmitting coil. What is also provided here is simultaneous reading of labels according to the so-called "tag talks first" principle. In the present invention, this is a "reader talks first" protocol.

In EP 1 298 573 (3 M), an RFID system with many antennas is described. The distance between an RFID label in a book and one of the many antennas is small. One by one, one of the many antennas is selected and thus an RFID tag in the proximity can be read. Due to the sequential character of this approach, the system is slow and not suitable for quickly taking stock of all labels. In addition, it is based on the labels being in a book and therefore having a known orientation. Synchronization of a carrier wave (generating, for instance, the interrogation field in the antenna) of multiple transmitters which are in one another's range is known per se, see US 57988709 (TI) in which a master RF module is used to control multiple readers.

Antennas with multiple loops are known from EP 0956613 (Checkpoint). Therein, a number of variants of an 8-shaped antenna coil are presented. In addition to the conventional series connection of the two loops of the 8-shape, *inter alia* a parallel control of the two sub-loops is proposed.

In EP 1 489684 (Sensormatic), an antenna system is described where the effect of zero zones is minimized. To this end, the field of a 0-shaped antenna is combined with the field of an 8-shaped one, while there is a switchover between control of the 8-shape in phase and control in antiphase. This is closely related to US 4 679 046 (Senelco). Therein, Curtis and Jordan describe a similar antenna construction, with the difference, however, that, here, the 0-antennas and 8-antennas are controlled with a 90-degree phase difference, in order to obtain a rotary field in a plane in front of the antennas. With a rotary field, a direction of the magnetic field rotates in a predetermined position. In both patents, the transmitting coils are in one plane.

In US 6 081 238 (Sensormatic) and US 6 020 856 (Sensormatic), Jorge Alicot describes an antenna configuration for an EAS system which provides an improved distribution of the interrogation field. Here, a transmitting antenna is used which consists of antenna loops which are next to one another in one plane. With EAS systems, the movement of a label upon passage through the exit ensures that there is a good chance that a point is reached where the magnetic coupling with the antennas is sufficiently large to detect a label. The direction of the magnetic field needs to correspond with the orientation of the label. In the Sensormatic patents, a solution to this problem is offered by controlling a number of transmitting antennas with, each time, a 90-degree phase difference, so that there is a good chance that there is sufficient coupling for detection of the label upon passing a passage.

With such a shelf system, a large number of RFID labels can quickly be read. However, the known variants of the shelf system have the drawback that they have large dimensions and/or are difficult to install and/or the detection area is not sufficiently clearly delimited and/or not all RFID labels in a rack are detected.

The invention contemplates meeting at least one of these drawbacks.

To this end, according to the invention, a shelf system is provided according to claim 1.

When many labels on a shelf are scanned, generally, the labels do not move; the shelf system according to the invention (hereinafter also referred to as smart shelf) offers the advantage that the rotary field considerably increases the chance of detection of labels on the shelf, since labels can couple with the rotary field in a large number of orientations.

Not detecting a label on the shelf immediately causes an error in the stock list. An action which is controlled by removing a label is useless if a product with label is not really taken from the shelf. Of labels with a marginal detection chance, this is monitored in the percentage of the number of scans in which the label has been detected, the smart shelf first makes some single scans before it is passed on to the higher system that a label has disappeared.

In order to successfully scan a rack full of articles, it is necessary that this requirement be met at each point of the rack. In any possible field direction, a minimum magnitude of the x, y and z component of the magnetic field intensity needs to be generated. With a single coil, this is not feasible.

In the smart shelf, antennas are included in the shelves of a rack, such that a rotary field is created between the shelves. To this end, the set of coils in the one shelf provides a field that is parallel to the shelf in some places. The set of coils in the nearby shelf (neighboring shelf) provides a field that is precisely transverse or perpendicular thereto in these places. By controlling both sets of coils with a 90-degree phase difference, a rotary field is created between the shelves. This has a great advantage over switching over the fields of the two systems, since now all labels which couple with the one of the other set of antennas can be read in one multiscan: a great gain in speed.

This rotary field forms a curved plane. Still, label orientations are possible which do not couple with the antennas. To this end, in a special embodiment, the invention provides a second set of antennas per shelf, also referred to as auxiliary antenna systems. This set is shifted with respect to the first set and by also providing the 90-degree phase difference in the control here, a second rotary field with a different orientation is created. Switching over between these two rotary fields provides a very good coverage of the space between the shelves. The antenna systems can also be controlled in phase and in antiphase. This provides magnetic fields with a still different orientation, so that the chance of detection of labels eventually increases still more.

Readily apparent variations, such as not switching over to but adding different configurations, are also part of the invention. Cooperating shelves according to the invention make it necessary that the frequency reference of the different cooperating shelves is synchronous.

To the transmitting coils, a receiving channel has been coupled, since labels which couple with the transmitting coil for energy transfer will also modulate onto these coils. However, all labels of the whole shelf do this, so that there is a great risk of collisions with multiscan. In addition to the systems of transmitting coils, a number of, preferably smaller, receiving antennas may be included in the shelves. These antennas preferably do not couple with the transmitting coils in order to be able to form a number of parallel reading channels in the multiscan mode.

The modulation of a label can be received both on one of the receiving antennas in the shelf above the label and on one of the antennas in the shelf below the label. If multiple labels are simultaneously active, the signal intensity of the labels in the receiving antennas will usually be unequal. There is a good chance that, on one the receiving channels, the strongest signal is so much stronger than the other signals together that reliable detection is possible. The location and orientation of the label on the shelf determine which receiving channel finally receives the code.

Due to the rotary field used of the transmitting coils, the phase of the return signal of the label depends on its orientation. In order to allow good detection, a phase-independent receiver is necessary. In the smart shelf, the information from the two label sidebands can be retrieved with a quadrature detector. Production distribution of labels, or detuning of the labels by, for instance, metal objects which are near the labels, will also cause a difference in the intensity of the sidebands. In the smart shelf, the two sidebands can be processed independently, and finally the best one can be used.

The signal intensity is a measure for a distance from the label to the antennas, and the phase of the label signal depends on the orientation of the label. A label will often be detected on a number of the parallel receiving channels. All information from a label, receiving channel number, intensity of the high sideband, intensity of the low sideband, phase of the label signal, and the field configuration in which the labels have been seen are monitored in real time in the smart shelf controller. In addition, per label, it is monitored what percentage of the scans is successful. The data from this list are used for two purposes. Firstly, on the basis of these list data, an optimal scan strategy is determined. For the multiscan, the number of labels present determines the optimal number of time locks. With the aid of the table contents, the controller determines the optimal numbers of time locks for the multiscan. The basic principle thereof is that, in a normal operating situation, there is often a stationary situation.

In order to scan labels of which the ID is already known, the label protocol of the Philips I.CODE UID or I.CODE EPC ICs has an option to include a mask in the commands so that exclusively the labels of which the mask matches respond to its ID code. In the most extreme situation, the mask is the entire ID code. We refer to this as pinging or, also, as single scan. An important property of single scan is that no collisions occur and that it operates much faster than multiscan. For instance, a multiscan for 64 time locks takes about 300 ms. With single scan, about 150 labels per second can be read.

In the smart shelf, dynamic switching over takes place between these two strategies. In order to detect new labels, the multiscan is used, and in order to check whether a label is still present, the single scan is used. The parameters of the scans are controlled by the previous history, the data from the table.

A second use of the table is to use information to determine the position of a label. The position of a label unambiguously and relatively simply calculably records what signal intensity, phase and receiving channels belong thereto. The inverse problem, determining the position of the label from these data, is much more difficult. In the smart shelf, a neural network is used to determine positions from the data in the table. Solving the inverse problem provides data with which the neural network is trained.

With reference to the drawing, which serves as a non-limitative example, the shelf system and the antenna construction of the smart shelf are explained in more detail. In the drawing:
Fig. 1 shows a schematic view of antenna system A;
Fig. 2 shows a schematic view of antenna system B;
Fig. 3 shows a schematic view of a combination of antenna system A and antenna system B;
Fig. 4 shows a schematic view of antenna system C, an alternative form for the antenna system B;
Fig. 5 shows a schematic view of a combination of antenna system A and antenna system C;
Fig. 6 shows a schematic view of a combination of antenna system C in combination with a shifted version C' of antenna system C; and
Fig. 7 shows a schematic view of a shelf system according to the invention.

In the Figures, corresponding parts are designated by corresponding reference numerals.

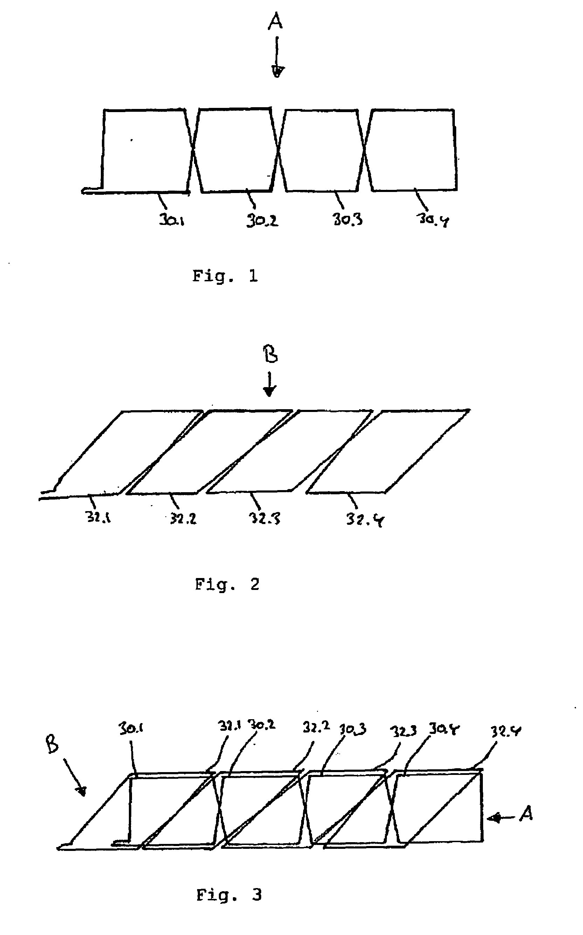

Fig. 1 schematically shows an antenna system A. The external dimensions of the antenna system A are preferably somewhat smaller than the external dimensions of a shelf, in this example 30 cm x 120 cm.

Due to the symmetrical bends in the antenna loop of the antenna system, the net dipole moment is small at any distance. In other words, successive sub-loops 30.k (k=1,2,3,...) are continuous in antiphase and zero one another out to a large extent.

An antenna system B shown in Fig. 2 shows a similar system, but with tilted coils. In the example of Fig. 2, the antenna systems B are tilted such that the antenna system B substantially comprises parallelogram-shaped sub-loops 32.m (m=1,2,3,...). Due to this inclined arrangement, the field direction is different from the field direction of the antenna system A.

Fig. 3 shows an example of a combination of the antenna system A and the antenna system B, the antenna system A and the antenna system B extending substantially parallel to each other, preferably in the same plane. In the combination of the antenna system A and the antenna system B, as shown in Fig. 3, there is no net coupling between the antenna system A and the antenna system B and there is a horizontal shift between the "centers of gravity" of the sub-loops 30.k, 32.m of the antenna system A and the antenna system B.

In a rack, the systems according to Fig. 3 are provided in the shelves one right over the other.

In one shelf, the antenna system A is activated, and, in the neighboring shelf, the antenna system B is activated, while a 90-degree phase difference is maintained between the current through the antenna system A and the antenna system B. Due to the spatial shift and the phase difference, a rotary field is created between the shelves.

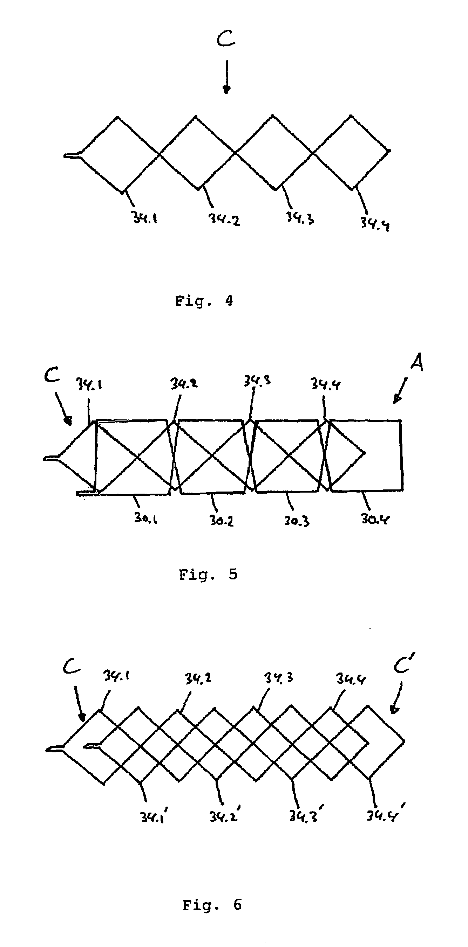

Variations in the coil shapes such as the antenna system C of Fig. 4 in combination with the antenna system A (see Fig. 5) or with a shifted version C' of the antenna system C, as shown in Fig. 6, are also part of the invention. The antenna system C comprises sub-loops 34.n (n=1,2,3,...). The antenna system C' comprises sub-loops 34.p'(p=1,2,3,...).

By changing the control to antenna system B of the respective shelf and antenna system A of the neighboring shelf, a second rotary field is created which is shifted with respect to the first rotary field.

Another variant is that coil systems (antenna systems) are not placed one right above the other, but that a small horizontal shift, preferably the size of half a sub-loop, of the sub-loops between the neighboring shelves has been realized. Then, the antenna system A of a shelf creates the rotary field in combination with the antenna system A of the neighboring shelf and likewise for system B.

Switching over between the two rotary fields or generating the two rotary fields simultaneously is part of the invention.

The receiving antennas are small, preferably not larger than about 5 cm x 5 cm and have been placed. On a shelf of 30 cm x 120 cm, for instance four separate receiving antennas may be sufficient. In the preferred embodiment of the invention, for each sub-loop of the transmitting coil (antenna systems A, B, C), a receiving antenna loop is provided.

The cooperating shelves of the smart shelf are synchronized at two levels and, in order to make the desired rotary fields, the carrier waves of the individual shelves are coupled to one another by means of a Phase Locked Loop (PLL).

In the approach of the invention, each shelf operates independently, and there is a provision to control the phase of the transmitted interrogation field. Once a particular value has been set, due to the limited accuracy of the quartz oscillator, a phase difference will still arise between the different transmitters, so that periodic recalibration of the PLL is necessary.

The receiver associated with the transmitter has a synchronous quadrature detector, with which the phase of the received signal is measured in comparison with the internal reference. In order to carry this out accurately, for a short time, the transmitters do not modulate. A central control of the shelf system can give a command for this. Also, this control designates a main transmitter, to which all other transceivers then synchronize.

On a protocol level, synchronization is needed to prevent one transmitter from modulating while the other transmitter has given a read command and is waiting for the response of labels. The much stronger transmitter modulation then drowns the fairly week label signals. In a special embodiment of the invention, this synchronization is realized by means of radio link, i.e. wireless.

The antenna systems need to be tuned accurately to the right frequency. Also, the good operation of the shelf system should not be disturbed by placing metal objects on a shelf. This has been solved by providing the antenna systems with an automatic tuning. In a special embodiment, the only wiring necessary to make the shelf system function is a feed connection. Thus, a smart shelf is very easy to install and to maintain.

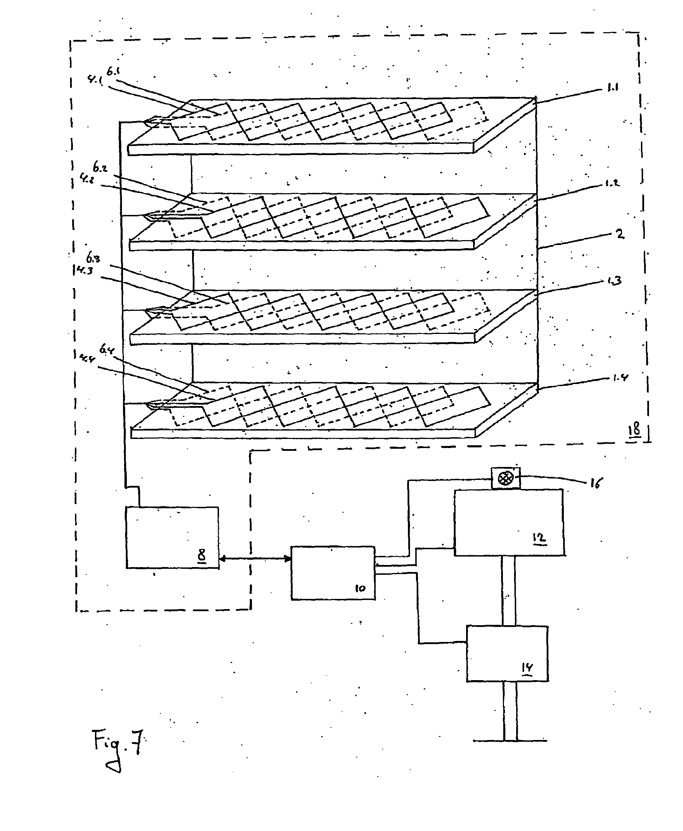

Fig. 7 shows a shelf system 2 provided with at least one shelf 1.1 arranged for accommodating articles such as books, packages, for instance with medicines, and/or videotapes. In this example, the shelf system 2 comprises a rack or cabinet provided with four such shelves 1.1, 1.2, 1.3 and 1.4, in this example placed one above the other. The shelf system is further provided with a label detection system.

In this example, in, on or to the shelf 1.1, a first antenna system 4.1 has been placed. Completely analogously, in, on or to the shelf 1.2, a second antenna system 4.2, in, on or to the shelf 1.3, a third antenna system 4.3 and in the shelf 1.4, a fourth antenna system 4.4 has been placed. In Fig. 7, the antenna systems 4.i (i=1,2,3,...) are shown by continuous lines.

In this example, in, on or to the shelf 1.1, a first auxiliary antenna system 6.1 has been placed. Completely analogously, in, on or to the shelf 1.2, a second auxiliary antenna system 6.2, in, on or to the shelf 1.3, a third auxiliary antenna system 6.3 and, in the shelf 1.4, a fourth auxiliary antenna system 6.4 has been placed. In Fig. 7, the auxiliary antenna systems 6.i are shown in broken lines.

Hereinafter, "(auxiliary) antenna system" will be written where "antenna system and/or auxiliary antenna system" is intended.

In Fig. 7, the (auxiliary) antenna systems 4.i, 6.i are designed like the antenna system C of Fig. 4. It will be clear that the (auxiliary) antenna systems 4.i, 6.i may also be designed like the antenna systems A and/or B. Here, it is noted that, for instance in Fig. 3, the antenna system A may considered the antenna system 4.i and the antenna system B the auxiliary antenna system 6.i. Note that, in Fig. 7, there is a horizontal shift between the "centers of gravity" of the sub-loops of antenna systems 4.i of neighboring shelves 1.i. Note that there is also a horizontal shift between the "centers of gravity" of the sub-loops of auxiliary antenna systems 6.i of neighboring shelves 1.i.

In use, in a first mode, only the antenna systems 4.i are activated, while a 90-degree phase difference is maintained between the currents through the antenna systems 4.i of neighboring shelves 1.i. The first antenna system 4.1 of the shelf 1.1, for instance, yields a field which is parallel to the shelf 1.2 in some places. The second antenna system 4.2 of the neighboring shelf 1.2 yields a field that is precisely transverse to the shelf 1.2 in these places. By controlling both antenna systems 4.1, 4.2 with a 90-degree phase difference, a rotary field is created between the shelves 1.1 and 1.2. Providing an interrogation field in the form of the rotary field offers the advantage that a chance of detection of an RFID label in the interrogation field is considerably greater than with a stationary interrogation field, since labels can couple with the rotary field in more label orientations than with the stationary field. It will be clear that the above holds for any combination of antenna systems 4.i of neighboring shelves 1.i.

The said rotary field generated by the antenna systems 4.i forms a curved plane. Still, label orientations are possible in which the label does not couple with the antenna systems 4.i. In order to meet this problem, the shelf system 2 may be provided with the auxiliary antenna systems 6.i. The auxiliary antenna systems 6.i are shifted with respect to the antenna systems 4.i.

In use, in a second mode, only the auxiliary antenna systems 6.i are activated, while a 90-degree phase difference is maintained between the currents through the auxiliary antenna systems 6.i of neighboring shelves 1.i. The first auxiliary antenna system 6.1 of the shelf 1.1, for instance, yields a field which is parallel to the shelf 1.2 in some places. The second auxiliary antenna system 6.2 of the neighboring shelf 1.2 yields a field that is precisely transverse to the shelf 1.2 in these places. By controlling both auxiliary antenna systems 6.1, 6.2 with a 90-degree phase difference, a rotary field is created between the shelves 1.1 and 1.2. It will be clear that the above holds for any combination of auxiliary systems 6.i of neighboring shelves 1.i.

In a same position, the rotary field generated by the auxiliary antennas 6.i has a different orientation from the rotary field generated there by the antenna systems 4.i. Therefore, alternately controlling the antenna systems 4.i and the auxiliary antenna systems 6.i in the first and second mode yields a very good coverage of the space between the shelves. It is also possible to simultaneously generate the rotary field generated by the antenna systems 4.i and the rotary field generated by the auxiliary antenna systems 6.i. Here, it is, for instance, possible to control the antenna systems 4.i and the auxiliary antenna systems 6.i in phase, in antiphase, or with a phase difference of, for instance, 90 degrees.

In the example of Fig. 7, it holds that the (auxiliary) antenna systems 4.i, 6.i are designed as insert modules each arranged to be placed on or to a shelf 1.i. By standardizing the insert modules, in a simple manner, each shelf can be included in a shelf system 2 according to the invention. This offers the advantage that a cabinet provided with shelves can quickly and efficiently be provided with the (auxiliary) antenna systems 4.i, 6.i in a modular manner.

On the other hand, it is also possible that the (auxiliary) antenna systems 4.i, 6.i are integrated in the shelf and/or the cabinet. This offers the advantage that the (auxiliary) antenna systems 4.i, 6.i can be concealed in the shelf and/or cabinet so as to be insusceptible to damage and/or in an esthetically fine manner.

In the example of Fig. 7, each (auxiliary) antenna system 4.i, 6.i substantially takes up the whole surface of a shelf 1.i. Thus, the presence of an RFID label in a zone between two shelves can be detected per shelf. It will be clear that the (auxiliary) antenna system may also take up a part of the shelf, while a remaining part of that shelf may contain a further (auxiliary) antenna system. Thus, on the shelf, a first and a further sub-zone are provided. In this case, the presence of an RFID label can be detected per sub-zone and optionally per shelf.

In the example of Fig. 7, the shelf system is further provided with a transmitting/receiving device 8. The transmitting/receiving device 8 comprises at least one transmitting device (transmitter) and at least one receiving device (receiver). It will be clear that the at least one transmitting device and the at least one receiving device may also form separate modules. The transmitting/receiving device 8 is connected with the (auxiliary) antenna systems 4.i, 6.i. In Fig. 7, the connection of the transmitting/receiving device with the (auxiliary) antenna systems 4.i, 6.i is schematically shown as a single line. It will be clear that, in practice, for instance, each antenna system 4.i and each auxiliary antenna system 6.i may be connected with the transmitting/receiving device 8 by means of two electrically conductive wires. In the example of Fig. 7, the shelf system 2 is provided with a transmitting device which is connected with all (auxiliary) antenna systems 4.i, 6.i. It will be clear that it is also possible that the shelf system is provided with a plurality of transmitting devices. Here, it may hold that each transmitting device is connected with one corresponding (auxiliary) antenna system 4.i, 6.i or with the (auxiliary) antenna systems of one shelf 1.i corresponding with that transmitting device. Here, it is possible that the transmitting device is integrated in the respective shelf 1.i or in the insert module. It will be clear that, if a phase difference is maintained between two (auxiliary) antenna systems, this can be realized by maintaining the phase difference between different outputs of one transmitter or by maintaining the phase difference between different transmitters. The latter may, for instance, be realized by intercoupling the transmitters, for instance wirelessly, in order to synchronize the transmitters, for instance by means of a PLL. Thus, the interrogation fields generated by the different transmitters and transmitted by the (auxiliary) antenna systems, which together form the rotary field(s), are synchronized.

In the example of Fig. 7, the transmitting/receiving device is designed as an absorption system, so that no separate receiving antennas are needed. Alternatively, or additionally, it is possible that the transmitting/receiving device is designed as a transmission system. In that case, preferably, each shelf is provided with at least one receiving antenna (not shown). Preferably, the at least one receiving antenna is placed such that it does not couple with the (auxiliary) antenna systems 4.i, 6.i. The at least one receiving antenna may, for instance, be placed transverse to the shelf 1.i, for instance in a back wall of the shelf system. If the shelf is provided with a plurality of receiving antennas, these may form parallel receiving channels. The receiving antennas are, for instance, small, preferably no larger than about 5 cm x 5 cm and have been placed. On a shelf of 30 cm x 120 cm, for instance four separate receiving antennas may be sufficient. In a preferred embodiment, for each sub-loop of the (auxiliary) antenna system 4.i, 6.i, a receiving antenna loop is provided.

The transmitting/receiving device 8 is further connected with a control device 10, also referred to as controller. The control device 10 is connected with an information output unit 12 which assumes the form of a display in this example. Further, the control device 10 is also connected with input means 14 which, in this example, assume the form of a card reader. Finally, the control device 10 is connected with a voice system 16. In this example, the (auxiliary) antenna systems 4.i, 6.i, the transmitting/receiving device and the control device 10 together form the label detection system 18 for reading out identification labels (not shown). The operation of the shelf system is as follows.

In use, a number of articles (not shown) have been placed in the shelf system 2. In this example, each article is provided with an identification label. The identification label is an RFID label known per se which responds when it is introduced into an electromagnetic interrogation field. This may, for instance, be a label which responds to an electromagnetic field having a frequency of 13.56 MHz. However, different frequencies are possible as well. The electromagnetic interrogation field is generated with the aid of the transmitting/receiving device 8. The result is that, with the aid of the antenna systems 4.i and/or the (auxiliary) antenna systems 6.i, an electromagnetic interrogation field is generated near the shelves 1.i. The result is that the identification labels located near a shelf 1.i will respond to the electromagnetic interrogation field. Here, the interrogation field is a rotary field. The transmitting/receiving device 8 can thus read out the labels located near the shelves 1.i. In this example, each identification label comprises an identification code and this code is read out with the aid of the transmitting/receiving device 8 to then be fed to the control device 10. Thus, the label detection system determines that the identified identification label is located near the shelves 1.i of the shelf system 2.

It is also possible that the transmitting/receiving device 8 is driven such that, at any time, only the (auxiliary) antenna systems of two neighboring shelves are controlled. Thus, for instance, the (auxiliary) antenna systems 4.2, 4.3 and/or 6.2, 6.3 of the shelves 1.2 and 1.3 can be controlled. Thus the label detection system determines whether and which identification labels are located between the shelves 1.2 and 1.3. By successively, for instance continuously alternately, each time controlling another pair of (auxiliary) antenna systems of neighboring shelves 1.j,1.(j+1) (j=1,2,...), successively all zones between neighboring shelves 1.j,1.(j+1) are scanned to determine which identification labels are present in the respective zones. Thus, the control device 10 knows which identification labels are located in which zones. This may, for instance, be stored in a memory of the control device 10 (for instance a PC).

In this example, the control device 10 further comprises, per identification label, information about an article to which that label is attached. If the article is a book, this information may, for instance, be the title of the book and the author. When the article is a package with medicines, this information may, for instance, be the name of the medicine and the amount of medicine in the package. In this example, the control device 10 is arranged such that it indicates on the display 12 which articles (name of the medicine, name of the book, etc.) are located in which zone, and/or sub-zone, of the shelf system 2. This may be made knowable in various manners. Thus, all this can be presented in a list of names of articles which are present in the shelf system. It is also possible for all this to be presented in a list in which, on the one hand, a number of a zone between two neighboring shelves is shown, which number is, for instance, also provided on the rack of the shelf system, and, on the other hand, a list of names of articles which are present in the respective zone. However, it is also conceivable that all this is indicated graphically, with, for instance, on the display, the individual shelves being shown, with a list with names of articles being indicated per shelf.

So, in this example, it holds that the control device 10 is provided with a memory in which it is monitored which identification label has been detected in the shelf system or in a zone between two neighboring shelves. The control device thus controls the label detection system such that, per rack and/or per zone, the labels present are detected and registered. It further holds that each label comprises an identification code, while, per identification code, the control device 10 comprises information about the article to which the respective label is attached.

In this example, it further holds that the shelf system according to the invention is provided with a collection of identification labels, while the control device 10 is provided with information about the collection of identification labels. In this example, this information about the collection comprises the identification codes of all labels issued. In this example, it further holds that, on the basis of the information about the collection, the control device can determine which labels have not been detected as being present in the shelf system or the scanned zones. In this manner, it can be determined which labels and/or articles are missing. The control device 10 further comprises information about in which zone a label and/or article is to be stored when the respective label and/or article is present. In this manner, in this example, the control device 10 can also determine in which zone which labels and/or articles are missing. The control device can register the latter, for instance in its memory, and/or output it to, for instance, the display 12. On the display 12, for instance, in addition to a list of articles present, a list with articles not present can be shown as well. Also, the control device 10 can determine that an article is, for instance, located in a wrong zone. This can also be shown on the display 12.

The shelf system of Fig. 7 is, for instance, designed as a shelf system for libraries. When a customer wishes to borrow a book, he can identify himself at the card reader 14 by having his identification card read out. Thus, the control device 10 knows the identity of the customer (person/company or organization) who wishes to take an article from the shelf system 2 designed as a bookcase. This customer may then, for instance, remove an article. The label detection system 18 detects that the respective article has been removed from the shelf system. In this example, this means, on the one hand, that that article is no longer present on the display 12 but is stated as being absent instead. Further, in a memory of the control device 10, it is registered that that article has been taken away by the identified customer. Here, it is possible that that article is released for being taken away, for instance by deactivating an antitheft bit, so that the article does not cause any alarm upon leaving, in this example, the library.

When a customer puts back an article in the shelf system for libraries, he does not need to identify (again). This is because, when the respective article is put back again in, for instance, a zone of the shelf system, the label detection system will detect this article and know that this article has been put back by the respective customer. This is because the article was registered as being lent out to the respective customer. It is possible that, here, that article is marked as not released for being taken away, for instance by activating an antitheft bit, so that that article will cause an alarm upon leaving, in this example, the library. In this example, it further holds that, when the respective customer has put back that article in a wrong zone, the label detection system will detect the respective article and will determine that the article has not been placed back in the desired zone. In order to correct his, the control device 10 will inform the respective customer, for instance via the voice system 16 and/or via the display 12, that he has placed the article in the wrong zone and will ask him to place it in the correct zone.

It is also possible that the shelf system is provided with a return shelf on which a customer puts back an article, for instance in the shelf system for libraries. When the article is put back in a zone of the return shelf, the label detection system will detect this article and know that the article was put back by the respective customer. In this case, it need not be required that the customer puts back the article in a predetermined zone of the return shelf. In a special embodiment, the return shelf and, if applicable, a rack or cabinet in which the return shelf is included is, at least partly, without a back wall. This makes it possible that the article is p laced back in the return shelf via, for instance, the front side (for instance in case of a book or videotape with the back to a back side of the return shelf), and can be taken out directly via, for instance, the back side, if the customer, or another customer, wishes to take the article away.

The shelf system of Fig. 7 may, for instance, also be designed as a shelf system for pharmacies. When a customer wishes to buy a medicine, an employee of the pharmacy will take a package with the respective medicine from the shelf. The shelf system will detect that the respective package is removed from the shelf system. Information with respect to the package and/or the medicine may, for instance, be passed on to a cash register system for having the customer pay for the medicine or, for instance, to an (electronic) file of the customer for storing data with respect to medicine use by the respective customer. The shelf system can also detect whether packages of the respective medicine are still present in the shelf system. Information with respect to the presence or absence of the respective medicine may, for instance, be fed to an (electronic) stock control system.

In this example, the employee of the pharmacy can identify himself by having his identification card read out by the card reader 14. Thus, the control device 10 knows the identity of the employee who wishes to take an article from the shelf system 2. This employee may, for instance, remove an article. So, during scanning, it is determined that the respective article has been removed from the shelf system. This for instance means that, on the one hand, the article is no longer indicated as being present on the display 12, but as absent instead. Further, in a memory of the control device 10, it is registered that that article has been removed by the identified employee. This information may, for instance, be used for the operational management of the pharmacy.

When an employee places an article for instance supplied by a supplier in the shelf system, then the label detection system will detect this article and pass on to, for instance, a stock control system that the respective article has been placed in the shelf system. In this example, it also holds that, when the respective employee places the article in a wrong zone, the label detection system will detect the respective article and will determine that the article has not been placed on the desired shelf. In order to correct this, the control device 10 will inform the respective employee, for instance via the voice system 16 and/or via the display 12, that he has placed the article in the wrong zone and will ask him to place it in the correct zone.

The shelf system of Fig. 7 may, for instance, also be designed as a shelf system for shops. When, for instance, a customer wishes to buy an article, he can identify himself at the card reader 14 by having his identification card read out. Thus, the control device 10 knows the identity of the customer (person/company or organization) who wishes to take an article from the shelf system 2. This customer may, for instance, remove an article. The label detection system determines that the respective article has been removed from the shelf system. It will be clear that, in this example, the display 12 not necessarily needs to be present near the cabinet to indicate whether an article is present or absent. Further, in a memory of the control device 10, it is registered that the respective article has been taken from the shelf by the identified customer. Information with respect to the article (or articles) taken from the shelf by the customer may then be fed to a cash register system, so that the customer can pay for the article (or articles) taken from the shelf before leaving the shop, or so that the costs of the article can be debited against a debit or credit account of the customer.

The shelf system of Fig. 7 may, for instance, also be designed as a shelf system for warehouses. When a customer wishes to buy an article, an employee of the warehouse will take the respective article from the shelf. The label detection system will detect that the respective package is removed from the shelf system. In this example, the employee of the warehouse can identify the customer, for instance for order picking, by having an identification card associated with the customer read out at the card reader 14 or, for instance, by having a barcode associated with the customer scanned or by entering a customer code associated with the customer on a keyboard. The control device 10 thus knows the identity of the customer to whom an article from the shelf system 2 will be delivered. The employee may, for instance, remove an article. The label detection system determines that the respective article has been removed from the shelf system. Further, in a memory of the control device 10, it is registered that the respective article has been removed and will be delivered to the identified customer.

More in general, it therefore holds that the control device is further provided with input means for inputting identity information of, for instance, a person, organization or company, while the control device is arranged for coupling information about a label or article which is put in a shelf or taken from the shelf with the identity information after identity information has been input and to store information of the intercoupled identity information and information about the article or label.

The invention is by no means limited to the above-described embodiments.

Of course, the shelf system of Fig. 7 may also be extended to include more than one rack. The components included within the hatching 18 in Fig. 7 may then be designed in multiples. In effect, this means that, per rack, use is made of a transmitting/receiving device 8, a display 12, a card reader 14, an output system 16 and a set of antenna systems. This collection 18 of components is then, for instance, connected with a common control device 10. Of course, it is also possible that all shelves of all racks are controlled with the aid of one transmitting/receiving device.

The shelf system as shown in Fig. 7, optionally comprising a plurality of racks, may, for instance, but not exclusively, be designed as a shelf system for libraries, a shelf system for pharmacies, a shelf system for shops or a shelf system for warehouses.

In the example of Fig. 7, identification labels contain an identification code while, in the control device, per identification code, information is included about the respective article to which the label is attached. However, it is also conceivable that the label itself is provided with information about the respective article. In that case, upon reading out a label, relevant information about the respective article is known immediately.

It will be clear that the shelf system according to the invention has many applications. Thus, it may be detected and/or indicated on, for instance, a display whether there are articles on a shelf which do not belong there. Also, in this manner, very quickly, stock can be taken of which articles are present in which location and which articles are missing. Also, the racks may have a mobile design so that they can be driven to a right location. As said, the shelf system may also be used for issuing articles in a simple manner and placing articles (back) in a simple manner, or, for instance, for sorting articles in a simple manner. Also, when a set of new articles is placed, these articles can simply be placed in the racks. The label detection system then immediately recognizes the new identification labels and when the identification codes of the respective labels have already been coupled to information about the respective articles, then it can be determined immediately which new articles have been placed in the racks and optionally on which shelves. The information of an article associated with an identification code may, for instance, be send along by a supplier of the articles and be read at the input unit 14 in a manner known per se. It is also possible that this information is automatically retrieved from, for instance, a supplier, for instance Internet, when the label detection system reads out an identification code in a shelf system which is not known to the shelf system. The shelf system may then automatically retrieve information about the respective article so that it is still known to the shelf system which article is located where.

The term rack should be understood in a broad sense. At least one shelf fixed on a wall may also be understood to mean a rack. A box comprising a number of shelves in which articles have been stored is also covered by the term rack.

Such variants are each understood to fall within the framework of the invention.

## Claims

1. A shelf system provided with a rack and a label detection system for generating an electromagnetic interrogation field for reading out RFID labels which are located in or on the rack, **characterized in that** the label detection system is provided with a first and a second antenna system for transmitting an interrogation field, and that the label detection system is arranged for generating the interrogation field in the form of a rotary field with the first and the second antenna system.

2. A shelf system according to claim 1, wherein the rack is provided with a first shelf and a second shelf, wherein the first antenna system has been added to the first shelf and the second antenna system has been added to the second shelf.

3. A shelf system according to claim 2, wherein the first antenna system extends substantially parallel to the first shelf and/or the second antenna system extends substantially parallel to the second shelf.

4. A shelf system according to any one of the preceding claims, wherein the first and/or the second antenna system comprises at least two sub-loops which are interconnected in antiphase.

5. A shelf system according to any one of the preceding claims, wherein the first antenna system has been shifted with respect to the second antenna system in a direction in a plane in which the first antenna system extends.

6. A shelf system according to claims 4 and 5, wherein the first antenna system has been shifted with respect to the second antenna system over substantially half a width of at least one of the sub-loops.

7. A shelf system according to any one of the preceding claims, wherein the label detection system is arranged for feeding a first signal to the first antenna system with a 90-degree phase difference with respect to a second signal fed to the second antenna system.

8. A shelf system according to at least claim 2, wherein, to the first shelf, further a first auxiliary antenna system has been added and/or, to the second shelf, further a second auxiliary antenna system has been added, wherein the first antenna system and the first auxiliary antenna system, respectively, are relatively positioned such that a magnetic coupling between the first antenna system and the first auxiliary antenna system is minimal, and/or the second antenna system and the second auxiliary antenna system, respectively, are relatively positioned such that a magnetic coupling between the second antenna system and the second auxiliary antenna system is minimal.

9. A shelf system according to claims 4 and 8, wherein, in use, through a sub-loop of the first antenna system, a first magnetic flux goes from at least a part of a first sub-loop of the first auxiliary antenna system and a substantially equally great, oppositely directed flux from at least a part of a second sub-loop of the first auxiliary antenna system and/or, through a sub-loop of the second antenna system, a first magnetic flux goes from at least a part of a first sub-loop of the second auxiliary antenna system and a substantially equally great, oppositely directed flux from at least a part of a second sub-loop of the second auxiliary antenna system, respectively.

10. A shelf system according to any one of the preceding claims, wherein the label detection system is further provided with at least one receiving antenna for reading out RFID labels, wherein the at least one receiving antenna does not couple with antenna systems and/or auxiliary antenna systems.

11. A shelf system according to any one of the preceding claims, wherein the label detection system comprises a memory for storing a list of RFID labels detected in the rack therein.

12. A shelf system according to claim 11, wherein, per detected RFID label, the list comprises as parameters: a signal intensity of the two sidebands, and/or a phase of the label signal, and/or a number of a shelf on which the label has been detected, and/or a number of a receiving channel and/or the field configuration used, and/or a detection percentage of the respective label, and/or information with respect to an article to which the label is attached, and/or information with respect to the person who has placed the label in the rack and/or has taken it from the shelf.

13. A shelf system according to claim 11 or 12, wherein the label detection system is arranged for carrying out a single scan for detecting a predetermined label from the list of detected labels, for instance utilizing the field configuration included in the list for that label.

14. A shelf system according to claim 13, wherein the rack is arranged for at least carrying out a single scan with at least two mutually different field configurations, if it has been detected that a label has been removed from the rack, for detecting the label detected as being removed.

15. A shelf system according to any one of the preceding claims, wherein the first and/or second antenna system, an optionally a first and/or second transmitting device of the label detection system which is connected with the first and/or second antenna system, respectively, has been integrated in the first and/or second shelf, respectively, or in a first and/or second insert module, respectively, which is arranged to be placed on, to or in the first and/or second shelf, respectively.

16. A shelf system according to claim 15, wherein the first and second transmitting device are, preferably wirelessly, coupled for synchronizing interrogation fields to be generated by the first and second transmitting device.

17. A shelf system according to any one of the preceding claims, comprising at least an RFID label.

18. A shelf according to any one of the preceding claims, comprising a plurality of racks.

19. A shelf system comprising a rack with multiple shelves for reading out RFID labels, wherein all antenna coils have been accommodated in the shelf, **characterized in that** a shelf cooperates with its immediate neighboring shelves to generate a rotary field.

20. A shelf system according to claim 19, **characterized in that**, in a shelf, two systems of antenna loops, A and B, have been provided which are relatively positioned such that the magnetic coupling between both systems is minimal and that system A of the one shelf is controlled with a 90-degree phase difference with respect to system B of the neighboring shelves, in order to realize a rotary field between the shelves.

21. A shelf system according to claim 19, **characterized in that**, in a shelf, two systems of antenna loops, A and B, have been provided which are relatively positioned such that the magnetic coupling between both systems is minimal and that system B of the one shelf is controlled with a 90-degree phase difference with respect to system A of the neighboring shelves, in order to realize a tilting of the rotary field according to claim 20.

22. A shelf system according to one or more of the preceding claims 19-21, **characterized by** a quick anti-collision handling by making use of parallel receiving channels, wherein each receiving channel has its own small antenna loop which does not magnetically couple with the transmitting loops.

23. A shelf system according to one or more of the preceding claims 19-22, **characterized in that**, by means of multiscan on all shelves and in all rotary field configurations, a list is built up of all detected labels with the signal intensity of the two sidebands, the phase of the label signal, the shelf number, the number of the receiving channel and the field configuration used, as well as the detection percentage of each label as parameters.

24. A shelf system according to one or more of the preceding claims 19-23, **characterized in that**, in order to be able to quickly detect that a label is removed from the shelf, periodically, a single scan is carried out on each label number from the list, using the optimal configuration.

25. A shelf system according to one or more of the preceding claims 19-24, **characterized in that**, in order to be able to detect as quickly as possible that one or more labels have been added, the multiscan makes use of the list to use the optimum number of time locks for the multiscan.

26. A shelf system according to one or more of the preceding claims 19-25, **characterized in that**, if it has been detected that a label has been removed from the rack, at least one other single scan is done on this label number in all configurations, wherein the detection percentage from the list determines how many scans need to be done before the label is reported as being removed.

27. A shelf system according to one or more of the preceding claims 19-26, **characterized in that** the list of claim 23 in which the detection parameters of all read labels have been stored is used to obtain an indication of the positions of the labels, using a self-learning neural network.

28. A shelf system according to one or more of the preceding claims 19-27, **characterized in that** the synchronization of the carrier wave of neighboring shelves is realized by means of a master-slave protocol, wherein the slave receives the carrier from the master and synchronizes thereon with the aid of a PLL, controlled by the main controller of the shelf.

29. A shelf system according to one or more of the preceding claims 19-28, **characterized in that**, in order to prevent modulation of a transmitter from occurring simultaneously with the response of a label, the transmitters are synchronized on a protocol level by means of a connection with the main controller of the shelf.

30. A shelf system according to one or more of the preceding claims 19-29, **characterized in that** the rack is built up from multiple identical shelves with integral electronics and antenna loops, only interconnected with two feed connections.

31. A shelf system according to one or more of the preceding claims 19-30, **characterized in that** the antennas can continuously and automatically be adjusted in their optimal working point with the aid of voltage-controlled capacities.

32. A shelf system according to any one of claims 1-18 and any one of claims 19-31.

33. A label detection system of a shelf system according to any one of the preceding claims.

34. A shelf or insert module of a shelf system according to any one of claims 1-32.
